# EUROPEAN PATENT APPLICATION

(11) **EP 4 851 961 A1**
(43) Date of publication of application: **09.12.2026**
(21) Application number: 26173605.2
(22) Date of filing: 21.04.2026
(51) Int. Cl.: G07C 5/00, H04L 9/32, H04W 12/06, H04L 9/40

(54) **A TELEMATICS UNIT AND A METHOD FOR ENABLING OFF-BOARD DIAGNOSTICS OF A THIRD-PARTY SUBSYSTEM**

(30) Priority: 02.06.2025 SE 2550545
(71) Applicant: Volvo Penta Corporation, 405 08 Göteborg (SE)
(72) Inventor: CEDER, Joakim, 432 57 Varberg (SE); KARLSSON, Fredrik, 423 61 Torslanda (SE); DAHLBERG, Per, 443 36 Lerum (SE); KRISHNAN, Anantha, 417 43 Göteborg (SE); TÜRKTEN, Batuhan, 417 79 Göteborg (SE)
(74) Representative: Zacco Sweden AB

(57) **Abstract**

A telematics unit onboard a vehicle or vessel for enabling off-board diagnostics of a third-party subsystem, the telematics unit comprising: a wireless communication interface configured to communicate with an off-board remote server associated with the third-party subsystem, and an on-board communication interface configured to communicate with the third-party subsystem, wherein the telematics unit is configured to: detect that security credentials are required to access operational data of the third-party subsystem, transmit, via the wireless communication interface, a request for the security credentials to the off-board remote server, receive, via the wireless communication interface, the security credentials from the off-board remote server, apply the received security credentials to retrieve, via the on-board communication interface, the operational data from the third-party subsystem, and transmit, via the wireless communication interface, the retrieved operational data to the off-board remote server, thereby enabling off-board diagnostics of the third-party subsystem.

## Description

### TECHNICAL FIELD

The disclosure relates generally to a telematics unit onboard a vehicle or vessel. In particular aspects, the disclosure relates to a telematics unit and a method for enabling off-board diagnostics of a third-party subsystem. The disclosure can be applied to marine vessels, heavy-duty vehicles, construction equipment, forestry machines and other types of vehicles. Although the disclosure may be described with respect to a particular vehicle or vessel, the disclosure is not restricted to any particular type of vehicle or vessel.

### BACKGROUND

Vehicles and marine vessels increasingly rely on advanced connected services for diagnostics, monitoring, and performance optimization, and often operate using subsystems from third-party manufacturers. These setups frequently require additional antennas and communication systems, driving up cost and complexity. Many industrial vehicle and marine vessel manufacturers resist such hardware additions, which can result in the above-mentioned connected services not working as intended. A vehicle or vessel telematics unit may provide some degree of connectivity to the third-party subsystems to uphold basic connected services, but the telematics unit often lacks integration and may be unable to access secure or proprietary data.

Hence, there is a need for a solution that supports more advanced connected services without requiring additional antennas and communication systems that add cost and complexity.

### SUMMARY

According to a first aspect of the disclosure, a telematics unit onboard a vehicle or vessel for enabling off-board diagnostics of a third-party subsystem is disclosed. The telematics unit comprises a wireless communication interface configured to communicate with an off-board remote server associated with the third-party subsystem, and an on-board communication interface configured to communicate with the third-party subsystem. The telematics unit is configured to: detect that security credentials are required to access operational data of the third-party subsystem, transmit, via the wireless communication interface, a request for the security credentials to the off-board remote server, receive, via the wireless communication interface, the security credentials from the off-board remote server, apply the received security credentials to retrieve, via the on-board communication interface, the operational data from the third-party subsystem, and transmit, via the wireless communication interface, the retrieved operational data to the off-board remote server, thereby enabling off-board diagnostics of the third-party subsystem. The first aspect of the disclosure may seek to securely enable off-board diagnostics of a third-party subsystem of the vehicle or vessel. A technical benefit may include improved off-board diagnostics by enabling access to the subsystem operational data through the telematics unit, thereby avoiding added hardware cost and system complexity.

Optionally in some examples, including in at least one preferred example, the security credentials comprise authentication credentials, and the telematics unit is configured to: apply the authentication credentials to the third-party subsystem to access the operational data, and retrieve, via the on-board communication interface, the operational data from the third-party subsystem via the on-board communication interface. The authentication credentials may be a digital certificate, an access token, or any other type of authentication credential suitable for machine-to-machine authentication. A technical benefit may include improved integration of the third-party subsystem, as remote off-board diagnostics is enabled also when authentication is required to grant access to the operational data.

Optionally in some examples, including in at least one preferred example, the security credentials comprise a decryption key, and wherein the telematics unit is configured to: retrieve, via the on-board communication interface, encrypted operational data from the third-party subsystem via the on-board communication interface, and apply the decryption key to obtain the operational data from the encrypted operational data. A technical benefit may include improved integration of the third-party subsystem, as remote off-board diagnostics is enabled also when decryption is required to access the operational data.

Optionally in some examples, including in at least one preferred example, the telematics unit is further configured to: process the retrieved operational data to generate diagnostic information derived from the operational data, and transmit, via the wireless communication interface, the diagnostic information to the off-board remote server. A technical benefit may include reducing the amount of transmitted data by generating diagnostic information locally in the telematics unit, thereby minimizing the need to send raw operational data to the remote server.

Optionally in some examples, including in at least one preferred example, the telematics unit is further configured to: receive, via the wireless communication interface, data selection criteria specifying what operational data to transmit, select a subset of the retrieved operational data based on the received data selection criteria, and transmit, via the wireless communication interface, the selected subset to the off-board remote server, thereby reducing the amount of data transmitted via the wireless communication interface. A technical benefit may include reducing the amount of transmitted data by selecting locally in the telematics unit a subset of the retrieved operational data information to send to the remote server.

Optionally in some examples, including in at least one preferred example, the telematics unit is further configured to: obtain, via the on-board communication interface, a device ID or authentication credentials of the third-party subsystem, and include the device ID or the authentication credentials in the request for security credentials transmitted to the off-board remote server, thereby establishing that the third-party subsystem is connected to the telematics unit. A technical benefit may include enhanced security by requiring the telematics unit to prove its connection to the third-party subsystem before security credentials are issued, thereby reducing the risk of unauthorized access.

Optionally in some examples, including in at least one preferred example, the wireless communication interface is a mobile communication network interface or a satellite communication network interface, and the on-board communication interface is a Controller Area Network bus interface.

According to a second aspect of the disclosure, a vehicle or vessel for enabling off-board diagnostics of a third-party subsystem is disclosed. The vehicle or the vessel comprises: a telematics unit according to any of examples of the first aspect, and a third-party subsystem comprising one or more sensors configured to monitor operational parameters, an electronic control unit configured to record operational data from the sensors, an on-board communication interface configured to enable data exchange between the third-party subsystem and the telematics unit, wherein access to the operational data by the telematics unit is controlled based on security credentials. The second aspect of the disclosure may seek to securely enable off-board diagnostics of a third-party subsystem of the vehicle or vessel. A technical benefit may include improved off-board diagnostics by enabling access to the third-party subsystem operational data through the telematics unit, thereby avoiding added hardware cost and system complexity.

Optionally in some examples, including in at least one preferred example, the third-party subsystem is an engine, the one or more sensors comprise a temperature sensor, a pressure sensor, and a speed sensor, and the operational data comprise engine temperature, oil pressure, and engine speed. A technical benefit may include facilitating access to critical engine parameters to enable remote off-board diagnostics.

According to a third aspect of the disclosure, a method for enabling off-board diagnostics of a third-party subsystem onboard a vehicle or vessel is disclosed. The method comprises: detecting that security credentials are required to access operational data of the third-party subsystem, transmitting, via a wireless communication interface, a request for the security credentials to the off-board remote server, receiving, via the wireless communication interface, the security credentials from the off-board remote server, retrieving, via an onboard communication interface, the operational data from the third-party subsystem by applying the received security credentials to retrieve, and transmitting, via the wireless communication interface, the retrieved operational data to the off-board remote server, thereby enabling off-board diagnostics of the third-party subsystem. The third aspect of the disclosure may seek to provide a method for enabling off-board diagnostics of a third-party subsystem of the vehicle or vessel. A technical benefit may include improved off-board diagnostics by enabling access to the subsystem operational data through the telematics unit, thereby avoiding added hardware cost and system complexity.

Optionally in some examples, including in at least one preferred example, the security credentials comprise authorization credentials, and retrieving S4 the operational data comprises: applying the authorization credentials to the third-party subsystem 120 to access the operational data, and retrieving, via the on-board communication interface, the operational data from the third-party subsystem. The authentication credentials may be a digital certificate, an access token, or any other type of authentication credential suitable for machine-to-machine authentication. A technical benefit may include improved integration of the third-party subsystem, as remote off-board diagnostics is enabled also when authentication is required to grant access to the operational data.

Optionally in some examples, including in at least one preferred example, the security credentials comprise a decryption key, and wherein retrieving the operational data comprises: retrieving, via the on-board communication interface, encrypted operational data from the third-party subsystem, and applying the decryption key to obtain the operational data from the encrypted operational data. A technical benefit may include improved integration of the third-party subsystem, as remote off-board diagnostics is enabled also when decryption is required to access the operational data.

Optionally in some examples, including in at least one preferred example, the method further comprises: processing the retrieved operational data to generate diagnostic information derived from the operational data, and transmitting, via the wireless communication interface, the diagnostic information to the off-board remote server. A technical benefit may include reducing the amount of transmitted data by generating diagnostic information locally in the telematics unit, thereby minimizing the need to send raw operational data to the remote server.

Optionally in some examples, including in at least one preferred example, the method further comprises: receiving, via the wireless communication interface, data selection criteria specifying operational data to be transmitted, selecting a subset of the retrieved operational data based on the received data selection criteria, and transmitting, via the wireless communication interface, the selected subset of operational data to the off-board remote server, thereby reducing the amount of data transmitted via the wireless communication interface. A technical benefit may include reducing the amount of transmitted data by selecting locally in the telematics unit a subset of the retrieved operational data information to send to the remote server.

Optionally in some examples, including in at least one preferred example, the method further comprising: obtaining, via the on-board communication interface, an identifier of the third-party subsystem, and including the identifier in the request for security credentials transmitted to the off-board remote server, thereby establishing that the third-party subsystem is connected to the telematics unit. A technical benefit may include enhanced security by requiring the telematics unit to prove its connection to the third-party subsystem before security credentials are issued, thereby reducing the risk of unauthorized access.

Optionally in some examples, including in at least one preferred example, the wireless communication interface is a mobile communication network interface or a satellite communication network interface, and the on-board communication interface is a Controller Area Network (CAN) bus.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 illustrates an example vessel comprising a telematics unit and a third-party subsystem, wherein the telematics unit is configured to transmit operational data from the third-party subsystem to a remote server for off-board diagnostics.
FIG. 2 illustrates a block diagram similar to the system of FIG. 1, providing further detail of the vehicle or marine vessel, including one or more sensors, an electronic control unit, and an on-board communication interface.
FIG. 3 is a flowchart of a method for enabling off-board diagnostics of a third-party subsystem onboard a vehicle or vessel.
FIG. 4A schematically illustrates a control unit.
FIG. 4B shows an example of a computer program product.
FIG. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

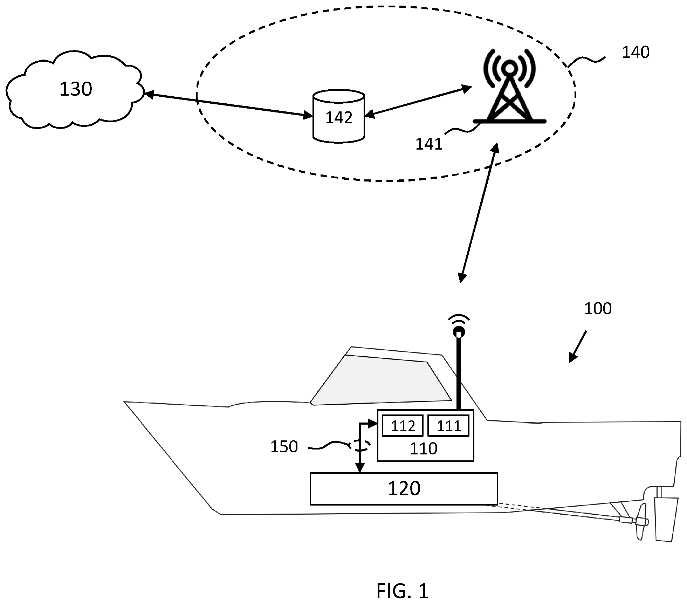

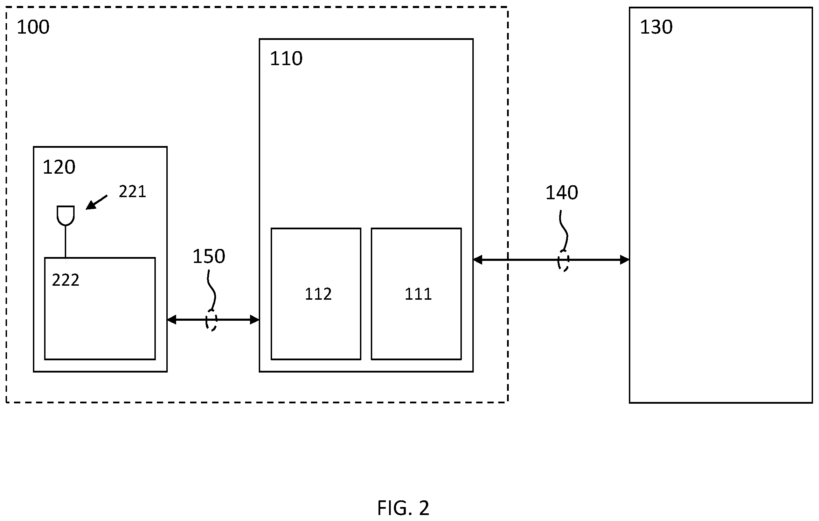

FIGS. 1-2 illustrate a telematics unit 110 onboard a vehicle or marine vessel 100, configured to retrieve operational data from a third-party subsystem 120 and transmit it to a remote server 130 for off-board diagnostics. The third-party subsystem 120 may by any type of vehicle or vessel component that supports off-board diagnostics. Examples of such subsystems include an engine, a transmission, other powertrain components, industrial implements, and electronic equipment.

The telematics unit 110 is comprised within the vehicle or the marine vessel 100 and is configured to communicate with: an on-board third-party subsystem 120, and an off-board remote server 130 associated with the third-party subsystem 120.

To communicate with the on-board third party subsystem 120, the telematics unit comprises an on-board communication interface 112, which may typically be a Controller Area Network (CAN) bus interface, but may also be any other type of communication interface, wireless or wired, that allows the telematics unit 110 to establish a connection 150 for data transfer with the third-party subsystem.

To communicate with the off-board remote server 130, the telematics unit comprises a wireless communication interface 111. The wireless communication interface 111 is typically a mobile communication network interface (e.g., 3GPP) or a satellite communication network interface, but may be any type of communication interface that enables the telematics unit 110 to send and receive data to and from the off-board remote server 130. FIG. 1 shows a telematics unit 110 onboard a marine vessel 100, configured to connect to a nearby base station 141, which routes data through the core network and a gateway node 142 to reach the remote server 130, thereby enabling an end-to-end communication path 140 between the telematics unit 110 and the remote server 130.

The telematics unit 110 is configured to detect that security credentials are required to access operational data of the third-party subsystem 120. The security credentials may include authentication credentials if the third-party subsystem requires authorization to grant access to its operational data, and a decryption key if decryption is required to access encrypted operational data. The authentication credentials may be a digital certificate, an access token, a pre-shared key, a cryptographic signature, or any other type of machine-readable identifiers used to verify identity or authorize access. The decryption key may be any type of cryptographic key, including symmetric keys, private keys, or hardware-based keys, depending on the security architecture of the system.

Upon detection that security credentials are required to access the operational data of the third-party subsystem 120, the telematics unit 110 is configured to transmit, via the wireless communication interface 111, a request for security credentials to the off-board remote server 130. In some examples, the request for security credentials may specify the scope of access required, such as permission to access specific components of the third-party subsystem. In some examples, the telematics unit 110 may be configured to obtain, via the on-board communication interface 112, a device ID or authentication credentials from the third-party subsystem 120, and include the device ID or the authentication credentials in the request for security credentials, thereby establishing that the third-party subsystem 120 is connected to the telematics unit 110 and preventing unauthorized access.

The telematics unit 110 is further configured to receive, via the wireless communication interface 111, the security credentials from the off-board remote server 130, and apply the received security credentials to retrieve, via the on-board communication 112. interface 112, the operational data from the third-party subsystem 120. Applying the received security credentials to retrieve the operational data may involve different operations depending on the requirements of the third-party subsystem 120. In one example, where authentication credentials are required for access to the operational data, applying the received security credentials to retrieve the operational data comprises: applying the authentication credentials to the third-party subsystem 120 to access the operational data, and retrieving, via the on-board communication interface, the operational data from the third-party subsystem 120. In another example, where a decryption key is required for decrypting encrypted operational data, applying the received security credentials to retrieve the operational data comprises: retrieving, via the on-board communication interface, encrypted operational data from the third-party subsystem 120, and applying the decryption key to obtain the operational data from the encrypted operational data. In yet another example, where both authentication credentials and a decryption key are required to access and decrypt the operational data, the two previous examples may be combined.

Lastly, the telematics unit 110 is configured to transmit, via the wireless communication interface 111, the retrieved operational data to the off-board remote server 130, thereby enabling off-board diagnostics of the third-party subsystem 120. The telematics unit 110 may also process the operational data prior to transmitting it to the off-board remote server 130. In one example, the telematics unit 110 may be configured to process the retrieved operational data to generate diagnostic information derived from the operational data, and transmit, via the wireless communication interface 111, the diagnostic information to the off-board remote server 130, thereby reducing the amount of transmitted data by generating diagnostic information locally within the telematics unit, and minimizing the need to send raw operational data to the remote server. In another example, the telematics unit 110 may be further configured to: receive, via the wireless communication interface 111, data selection criteria specifying what operational data to transmit, select a subset of the retrieved operational data based on the received data selection criteria, and transmit, via the wireless communication interface 111, the selected subset to the off-board remote server 130, thereby reducing the amount of data by selecting locally in the telematics unit a subset of the retrieved operational data to send to the off-board remote server 130.

FIGS. 1-2 also illustrate a second aspect of the disclosure relating to a vehicle or vessel 100 for enabling off-board diagnostics of a third-party subsystem 120. The vehicle or the vessel comprises a telematics unit 110 according to any of the examples of the first aspect of the disclosure. The vehicle or the vessel also comprises a third-party subsystem 120 comprising: one or more sensors 221 configured to monitor operational parameters, an electronic control unit 222 configured to record operational data from the sensors, an onboard communication interface 112 configured to enable data exchange between the third-party subsystem 120 and the telematics unit 110, wherein access to the operational data by the telematics unit 110 requires application of valid security credentials. In one example, the third-party subsystem may be an engine, the one or more sensors may comprise a temperature sensor, a pressure sensor, and a speed sensor, and the operational data may comprise engine temperature, oil pressure, and engine speed.

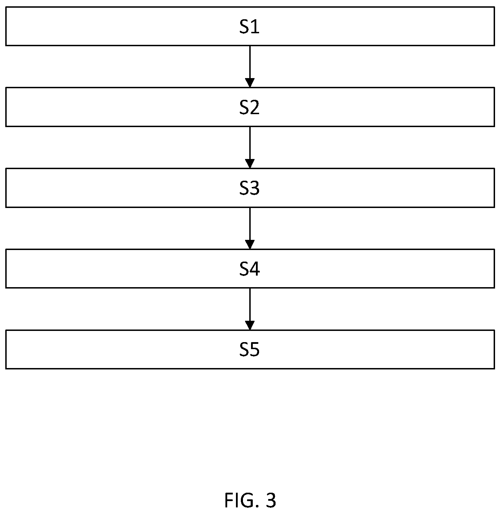

FIG. 3 illustrates a third aspect of the disclosure relating to a method for enabling off-board diagnostics of a third-party subsystem 120 onboard a vehicle or vessel 100. The method comprises: detecting S1 that security credentials are required, transmitting S2 a request for the security credentials, receiving S3 the security credentials, retrieving S4 operational data by applying the security credentials, and transmitting S5 the retrieved operational data. It should be noted that any features described in connection with the first and second aspects are also relevant to the third aspect.

The method comprises detecting S1 that security credentials are required. The security credentials may include authentication credentials if the third-party subsystem requires authorization to grant access to its operational data, and a decryption key if decryption is required to access encrypted operational data. The authentication credentials may be a digital certificate, an access token, a pre-shared key, a cryptographic signature, or any other type of machine-readable identifiers used to verify identity or authorize access. The decryption key may be any type of cryptographic key, including symmetric keys, private keys, or hardware-based keys, depending on the security architecture of the system.

The method further comprises, in response to detecting that security credentials are required, transmitting S2, via a wireless communication interface, a request for the security credentials to the off-board remote server 130. In some examples, the request for security credentials may specify the scope of access required, such as permission to access specific components of the third-party subsystem. In some examples, the method comprises obtaining, via the on-board communication interface 112, a device ID or authentication credentials from the third-party subsystem 120, and include the device ID or the authentication credentials in the request for security credentials, thereby establishing that the third-party subsystem 120 is connected to the telematics unit 110 and preventing unauthorized access.

Next, the method comprises receiving S3, via the wireless communication interface, the security credentials from the off-board remote server 130. Upon receiving the security credentials, the method comprises retrieving S4, via an on-board communication interface, the operational data from the third-party subsystem 120 by applying the received security credentials. Retrieving S4 may involve different ways of applying the security credentials depending on the requirements of the third-party subsystem 120. In one example, where authentication credentials are required for access to the operational data, applying the received security credentials to retrieve the operational data comprises: applying the authentication credentials to the third-party subsystem 120 to access the operational data, and retrieving, via the on-board communication interface, the operational data from the third-party subsystem 120. In another example, where a decryption key is required for decrypting encrypted operational data, applying the received security credentials to retrieve the operational data comprises: retrieving, via the on-board communication interface, encrypted operational data from the third-party subsystem 120, and applying the decryption key to obtain the operational data from the encrypted operational data. In yet another example, where both authentication credentials and a decryption key are required to access and decrypt the operational data, the two previous examples may be combined.

As a subsequent step, the method comprises transmitting S5, via the wireless communication interface, the retrieved operational data to the off-board remote server 130, thereby enabling off-board diagnostics of the third-party subsystem 120. The method may also comprise processing the operational data prior to transmitting it to the off-board remote server 130. In one example, the method may comprise processing the retrieved operational data to generate diagnostic information derived from the operational data, and transmitting, via the wireless communication interface 111, the diagnostic information to the off-board remote server 130, thereby reducing the amount of transmitted data by generating diagnostic information locally within the telematics unit, and minimizing the need to send raw operational data to the remote server. In another example, the method may comprise: receiving, via the wireless communication interface 111, data selection criteria specifying what operational data to transmit, selecting a subset of the retrieved operational data based on the received data selection criteria, and transmitting, via the wireless communication interface 111, the selected subset to the off-board remote server 130, thereby reducing the amount of data transmitted to the off-board remote server 130.

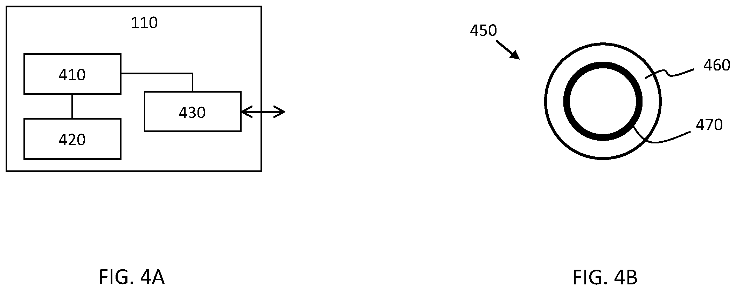

FIG. 4A schematically illustrates, in terms of a number of functional units, the components of a control unit 110 according to aspects of the discussions and methods disclosed herein. This control unit 110 may typically be comprised in the vehicle or vessel 100. Processing circuitry 410 is provided using any combination of one or more of a suitable central processing unit CPU, multiprocessor, microcontroller, digital signal processor DSP, etc., capable of executing software instructions stored in a computer program product, e.g., in the form of a storage medium 420. The processing circuitry 410 may further be provided as at least one application specific integrated circuit ASIC, or field programmable gate array FPGA.

Particularly, the processing circuitry 410 is configured to cause the control unit 110 to perform a set of operations, or steps, such as the methods discussed in connection to FIG. 3. For example, the storage medium 420 may store the set of operations, and the processing circuitry 410 may be configured to retrieve the set of operations from the storage medium 420 to cause the control unit 110 to perform the set of operations. The set of operations may be provided as a set of executable instructions. Thus, the processing circuitry 410 is thereby arranged to execute methods as herein disclosed.

The storage medium 420 may also comprise persistent storage, which, for example, can be any single one or combination of magnetic memory, optical memory, solid state memory or even remotely mounted memory.

The control unit 110 may further comprise one or more interfaces 111, 112 for communications with at least one external system, such as third-party subsystem 120 and off-board remote server 130. As such the interface 430, 111, 112 may comprise one or more transmitters and receivers, comprising analogue and digital components and a suitable number of ports for wireline or wireless communication.

The processing circuitry 410 controls the general operation of the control unit 110, e.g., by sending data and control signals to the interface 430, 111, 112 and the storage medium 420, by receiving data and reports from the interface 430, 111, 112 and by retrieving data and instructions from the storage medium 420. Other components, as well as the related functionality, of the control node are omitted in order not to obscure the concepts presented herein.

FIG. 4B shows an example of a computer program product. A computer readable medium 460 carrying a computer program 470 comprising program code means for performing the steps of aforementioned method when said program product is run on a computer or on processing circuitry 410 of a control unit 110.

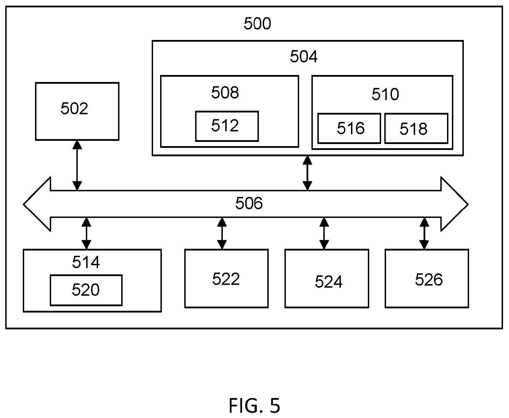

FIG. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., randomaccess memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device
interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A telematics unit 110 onboard a vehicle or vessel 100 for enabling off-board diagnostics of a third-party subsystem 120, the telematics unit comprising: a wireless communication interface configured to communicate with an off-board remote server 130 associated with the third-party subsystem 120; and an on-board communication interface configured to communicate with the third-party subsystem 120; wherein the telematics unit is configured to: detect that security credentials are required to access operational data of the third-party subsystem 120; transmit, via the wireless communication interface 111, a request for the security credentials to the off-board remote server 130; receive, via the wireless communication interface 111, the security credentials from the off-board remote server 130; apply the received security credentials to retrieve, via the on-board communication interface 112, the operational data from the third-party subsystem 120; and transmit, via the wireless communication interface 111, the retrieved operational data to the off-board remote server 130, thereby enabling off-board diagnostics of the third-party subsystem 120.

Example 2: The telematics unit 110 of example 1, wherein the security credentials comprise authentication credentials required for access to the operational data, and wherein applying the received security credentials to retrieve the operational data comprises: applying the authentication credentials to the third-party subsystem 120 to access the operational data; and retrieving, via the on-board communication interface, the operational data from the third-party subsystem 120.

Example 3: The telematics unit 110 of example 2, wherein the authentication credentials is a digital certificate or an access token.

Example 4: The telematics unit 110 of any of examples 1-3, wherein the security credentials comprise a decryption key, and wherein applying the received security credentials to retrieve the operational data comprises: retrieving, via the on-board communication interface, encrypted operational data from the third-party subsystem 120; and applying the decryption key to obtain the operational data from the encrypted operational data.

Example 5: The telematics unit 110 of any of examples 1-4, wherein the telematics unit 110 is further configured to: process the retrieved operational data to generate diagnostic information derived from the operational data; and transmit, via the wireless communication interface 111, the diagnostic information to the off-board remote server 130.

Example 6: The telematics unit 110 of any of examples 1-5, wherein the telematics unit 110 is further configured to: receive, via the wireless communication interface 111, data selection criteria specifying what operational data to transmit; select a subset of the retrieved operational data based on the received data selection criteria; and transmit, via the wireless communication interface 111, the selected subset to the off-board remote server 130, thereby reducing the amount of data transmitted via the wireless communication interface 111.

Example 7: The telematics unit 110 of any of examples 1-6, wherein the telematics unit 110 is further configured to: obtain, via the on-board communication interface, a device ID or authentication credentials of the third-party subsystem 120; and include the device ID or the authentication credentials in the request for security credentials transmitted to the off-board remote server 130, thereby establishing that the third-party subsystem 120 is connected to the telematics unit 110.

Example 8: The telematics unit 110 of any of examples 1-7, wherein the wireless communication interface 111 is a mobile communication network interface or a satellite communication network interface and the on-board communication interface 112 is a Controller Area Network bus interface.

Example 9: A vehicle or vessel 100 for enabling off-board diagnostics of a third-party subsystem 120, the vehicle or the vessel comprising: a telematics unit 110 according to any of examples 1-8; and a third-party subsystem 120 comprising: one or more sensors 221 configured to monitor operational parameters; an electronic control unit 222 configured to record operational data from the sensors; an on-board communication interface 112 configured to enable data exchange between the third-party subsystem 120 and the telematics unit 110, wherein access to the operational data by the telematics unit 110 requires application of valid security credentials.

Example 10: The vehicle or vessel 100 of example 9, wherein the third-party subsystem is an engine; the one or more sensors comprise a temperature sensor, a pressure sensor, and a speed sensor; and the operational data comprise engine temperature, oil pressure, and engine speed.

Example 11: A method for enabling off-board diagnostics of a third-party subsystem 120 onboard a vehicle or vessel 100, the method comprising: detecting S1 that security credentials are required to access operational data of the third-party subsystem 120; transmitting S2, via a wireless communication interface, a request for the security credentials to the off-board remote server 130; receiving S3, via the wireless communication interface, the security credentials from the off-board remote server 130; retrieving S4, via an on-board communication interface, the operational data from the third-party subsystem 120 by applying the received security credentials; and transmitting S5, via the wireless communication interface, the retrieved operational data to the off-board remote server 130, thereby enabling off-board diagnostics of the third-party subsystem 120.

Example 12: The method of example 11, wherein the security credentials comprise authentication credentials, and wherein retrieving S4 the operational data comprises: applying the authentication credentials to the third-party subsystem 120 to access the operational data; and retrieving, via the on-board communication interface, the operational data from the third-party subsystem 120.

Example 13: The method of example 12, wherein the authentication credentials is a digital certificate or an access token.

Example 14: The method of any of examples 11-13, wherein the security credentials comprise a decryption key, and wherein retrieving S4 the operational data comprises: retrieving, via the on-board communication interface 112, encrypted operational data from the third-party subsystem 120; and applying the decryption key to obtain the operational data from the encrypted operational data.

Example 15: The method of any of examples 11-14, further comprising: processing the retrieved operational data to generate diagnostic information derived from the operational data; and transmitting, via the wireless communication interface, the diagnostic information to the off-board remote server 130.

Example 16: The method of any of examples 11-15, further comprising: receiving, via the wireless communication interface, data selection criteria specifying operational data to be transmitted; selecting a subset of the retrieved operational data based on the received data selection criteria; and transmitting, via the wireless communication interface 111, the selected subset of operational data to the off-board remote server 130, thereby reducing the amount of data transmitted via the wireless communication interface 111.

Example 17: The method of any of examples 11-16, further comprising: obtaining, via the on-board communication interface, a device ID or authentication credentials of the third-party subsystem 120; and including the device ID or the authentication credentials in the request for security credentials transmitted to the off-board remote server 130, thereby establishing that the third-party subsystem 120 is connected to the telematics unit 110.

Example 18: The method of any of examples 11-17, wherein the wireless communication interface is a mobile communication network interface or a satellite communication network interface, and the on-board communication interface is a Controller Area Network CAN bus.

Example 19: A computer program product comprising program code for performing, when executed by the processing circuitry, the method of any of examples 11-18.

Example 20: A non-transitory computer-readable storage medium comprising instructions, which when executed by the processing circuitry, cause the processing circuitry to perform the method of any of examples 11-18.

The use of authentication credentials and decryption keys, as well as their application in secure systems, is well known in the art. Accordingly, as used herein, "applying the received security credentials" refers to performing one or more actions necessary to enable access to the operational data, such as authenticating with the third-party subsystem and/or decrypting encrypted operational data.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings, rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A telematics unit (110) onboard a vehicle or vessel (100) for enabling off-board diagnostics of a third-party subsystem (120), the telematics unit comprising: a wireless communication interface configured to communicate with an off-board remote server (130) associated with the third-party subsystem (120); and an on-board communication interface configured to communicate with the third-party subsystem (120); wherein the telematics unit is configured to:
detect that security credentials are required to access operational data of the third-party subsystem (120);
transmit, via the wireless communication interface (111), a request for the security credentials to the off-board remote server (130);
receive, via the wireless communication interface (111), the security credentials from the off-board remote server (130);
apply the received security credentials to retrieve, via the on-board communication interface (112), the operational data from the third-party subsystem (120); and
transmit, via the wireless communication interface (111), the retrieved operational data to the off-board remote server (130), thereby enabling off-board diagnostics of the third-party subsystem (120).

2. The telematics unit (110) of claim 1, wherein the security credentials comprise authentication credentials required for access to the operational data, and wherein applying the received security credentials to retrieve the operational data comprises:
applying the authentication credentials to the third-party subsystem (120) to access the operational data; and
retrieving, via the on-board communication interface, the operational data from the third-party subsystem (120).

3. The telematics unit (110) of claim 2, wherein the authentication credentials comprise a digital certificate or an access token.

4. The telematics unit (110) of any of claims 1-3, wherein the security credentials comprise a decryption key, and wherein applying the received security credentials to retrieve the operational data comprises:
retrieving, via the on-board communication interface, encrypted operational data from the third-party subsystem (120); and
applying the decryption key to obtain the operational data from the encrypted operational data.

5. The telematics unit (110) of any of claims 1-4, wherein the telematics unit (110) is further configured to:
process the retrieved operational data to generate diagnostic information derived from the operational data; and
transmit, via the wireless communication interface (111), the diagnostic information to the off-board remote server (130).

6. The telematics unit (110) of any of claims 1-5, wherein the telematics unit (110) is further configured to:
receive, via the wireless communication interface (111), data selection criteria specifying what operational data to transmit;
select a subset of the retrieved operational data based on the received data selection criteria; and
transmit, via the wireless communication interface (111), the selected subset to the off-board remote server (130), thereby reducing the amount of data transmitted via the wireless communication interface (111).

7. A vehicle or vessel (100) for enabling off-board diagnostics of a third-party subsystem (120), the vehicle or the vessel comprising:
a telematics unit (110) according to any of claims 1-6; and
a third-party subsystem (120) comprising: one or more sensors (221) configured to monitor operational parameters; an electronic control unit (222) configured to record operational data from the sensors; an on-board communication interface (112) configured to enable data exchange between the third-party subsystem (120) and the telematics unit (110), wherein access to the operational data by the telematics unit (110) requires application of valid security credentials.

8. The vehicle or vessel (100) of claim 7, wherein the third-party subsystem is an engine; the one or more sensors comprise a temperature sensor, a pressure sensor, and a speed sensor; and the operational data comprise engine temperature, oil pressure, and engine speed.

9. A method for enabling off-board diagnostics of a third-party subsystem (120) onboard a vehicle or vessel (100), the method comprising:
detecting (S1) that security credentials are required to access operational data of the third-party subsystem (120);
transmitting (S2), via a wireless communication interface, a request for the security credentials to the off-board remote server (130);
receiving (S3), via the wireless communication interface, the security credentials from the off-board remote server (130);
retrieving (S4), via an on-board communication interface, the operational data from the third-party subsystem (120) by applying the received security credentials; and
transmitting (S5), via the wireless communication interface, the retrieved operational data to the off-board remote server (130), thereby enabling off-board diagnostics of the third-party subsystem (120).

10. The method of claim 9, wherein the security credentials comprise authentication credentials, and wherein retrieving (S4) the operational data comprises:
applying the authentication credentials to the third-party subsystem (120) to access the operational data; and
retrieving, via the on-board communication interface, the operational data from the third-party subsystem (120).

11. The method of claim 10, wherein the authentication credentials comprise a digital certificate or an access token.

12. The method of any of claims 9-11, wherein the security credentials comprise a decryption key, and wherein retrieving (S4) the operational data comprises:
retrieving, via the on-board communication interface (112), encrypted operational data from the third-party subsystem (120); and
applying the decryption key to obtain the operational data from the encrypted operational data.

13. The method of any of claims 9-12, further comprising:
processing the retrieved operational data to generate diagnostic information derived from the operational data; and
transmitting, via the wireless communication interface, the diagnostic information to the off-board remote server (130).

14. The method of any of claims 9-13, further comprising:
receiving, via the wireless communication interface, data selection criteria specifying operational data to be transmitted;
selecting a subset of the retrieved operational data based on the received data selection criteria; and
transmitting, via the wireless communication interface (111), the selected subset of operational data to the off-board remote server (130), thereby reducing the amount of data transmitted via the wireless communication interface (111).

15. A non-transitory computer-readable storage medium comprising instructions, which when executed by the processing circuitry, cause the processing circuitry to perform the method of any of claims 9-14.
